# EUROPEAN PATENT APPLICATION

(11) **EP 1 744 125 A1**
(43) Date of publication of application: **17.01.2007**
(21) Application number: 06002445.2
(22) Date of filing: 07.02.2006
(51) Int. Cl.: G01C 23/00, G06F 17/30

(54) **Synchronization of computer terminals in an aircraft**

(30) Priority: 13.07.2005 US 698715 P
(71) Applicant: Lufthansa Sytems Group GmbH, 65451 Kelsterbach (DE)
(72) Inventor: Plogmann, Oliver, 65195 Wiesbaden (DE)
(74) Representative: Peterreins, Frank

(57) **Abstract**

A method for providing information to a pilot computer terminal (3) in a cockpit of an aircraft, wherein the method comprises the following steps: selecting (10) information by using the input means (6a, 7a, 8a) of a co-pilot computer terminal (2) and synchronizing (14) the selected information to the pilot computer terminal (3) and a computer terminal (2) for a cockpit of an aircraft for carrying out the steps of the method.

## Description

The present invention relates to computer terminals for cockpits of aircrafts, in particular to use of the computer terminals during the flight.

In more and more cockpits of aircrafts computer terminals are used to present certain information to the pilots. Examples for such information are flight charts. The computer terminal is connected to a keyboard, a track ball, a mouse and/or comprises a touch screen or line selecting keys to request the computer terminal to generate the appropriate flight chart for the present flight situation and to display the chart on a screen.

However, during the flight the pilot may not be able to request and to select the appropriate information, since he must concentrate on the flight.

Therefore, the object of the present invention is to provide a system and a method for selecting and generating information for a computer terminal of the pilot in an aircraft cockpit without the need of the attention of the pilot.

The problem is solved by a method according to independent claim 1 and by a computer terminal according to independent claim 9.

According to the present invention, a method for providing information to a pilot computer terminal is provided. The method comprises the following steps: selecting information by using the input means of a co-pilot computer terminal and synchronizing the selected information to the pilot computer terminal.

The terms pilot computer terminal and co-pilot computer terminal refer to two different computer terminals in a cockpit and do not relate to the rank of the present user. However, in the present invention the pilot computer terminal is the computer terminal which receives information from the co-pilot computer terminal, whereas the co-pilot computer terminal is the computer terminal which sends the information to the pilot computer terminal. Therefore, the co-pilot computer terminal may also be called "master" whereas the pilot computer terminal may also be called "slave". Since both computer terminals preferably comprise the same functionality, each of the computer terminals may act at one point in time as pilot computer terminal and at another point in time as co-pilot computer terminal.

In the following, the invention is described based on the communication between two computer terminals. However, as a matter of course the co-pilot computer terminal may also synchronize information with more than one pilot computer terminal.

According to the invention, the information for the pilot computer terminal is selected based on inputs via the input means of the co-pilot computer terminal. Examples for such input means are a keyboard, a mouse, a track ball, a touch screen or line select keys. In addition, every other technology may be used which enables a user to inform the computer terminal about his needs.

The information to be selected by the co-pilot via the input means is, for example, a flight chart. In a preferred embodiment of the present invention, the selected information, for example the selected flight chart, will be generated based on data stored in a database. The generated information is preferably displayed on a display of the co-pilot computer terminal. The co-pilot may check whether the generated and displayed chart is correct.

According to the present invention, in response to input at the pilot computer terminal or at the co-pilot computer terminal, the selected information at the co-pilot computer terminal is synchronized with the pilot computer terminal. Of course, the co-pilot may synchronize information relating to one or more charts with the pilot computer terminal.

Each of the computer terminals may comprise a database with certain data based on which flight charts may be generated. However, according to an alternatively embodiment, the pilot computer terminal and the co-pilot computer terminal may be connected to the same database.

In a preferred embodiment of the method according to the present invention the method further comprises the step of affecting the information displayed on the co-pilot computer terminal via the input means of the co-pilot computer terminal. Examples for affecting the information are: to zoom in or out, to pivot the pane, to change between day mode and night mode, to show or hide certain subcharts and to change from normal view to full screen mode and vice versa. In a preferred embodiment, these settings made by the co-pilot are also synchronized between the co-pilot computer terminal and the pilot computer terminal.

In a further preferred embodiment, the synchronization comprises the step of sending information relating to the charts and, preferably, about the selected settings from the co-pilot computer terminal to the pilot computer terminal. This information may comprise a clear indication which chart was selected by the co-pilot and, preferably, which settings were chosen by the co-pilot. Based on this information, the pilot computer terminal generates the same charts with, preferably, the same settings as selected on the co-pilot computer terminal. In a further step, the generated information, preferably with the same settings, is displayed on a display of the pilot computer terminal.

Preferably, the information sent from the co-pilot computer terminal to the pilot computer terminal comprises a reference to the version of the chart selected at the co-pilot computer terminal. If the pilot computer terminal has only access to an older version of this chart, the pilot computer terminal may request as part of the synchronization via the co-pilot computer terminal a copy of the data relating to this chart or of the data relating to the differences between the older and the newer version. Corresponding steps may be carried out if the pilot computer terminal may have access to a newer version of the chart than the co-pilot computer terminal. In this case, the pilot computer terminal provides the co-pilot computer terminal with corresponding data.

According to the present invention, various security functions may be also provided. For example, one function may ensure that inputs via the input means of the pilot computer terminal overrule changes synchronized by the co-pilot computer terminal.

The above mentioned problem is also solved by a computer terminal for a cockpit of an aircraft, wherein the computer terminal comprises a network connection which can be used to connect the computer terminal to at least one further computer terminal. The computer terminal comprises means for receiving information from the at least one further computer terminal and for sending information to the at least one further computer terminal. Further, the computer terminal is configured to select information via input means of the computer terminal and to synchronize the selected information with the at least one further computer terminal via the network connection.

The computer terminal according to the present invention comprises at least a processor, a memory, output means and input means. According to a preferred embodiment input means and output means are realized by a touch screen or by a screen with line select keys. The computer terminals may comprise also further connections, such as connections to other systems within the cockpit.

In a preferred embodiment of the present invention, the computer terminal is connected to a database. Further, the computer terminal comprises means for generating the selected information based on data stored in the database. The computer terminal also comprises means for displaying the generated information on a display of the co-pilot computer terminal.

In a preferred embodiment, the computer terminal according to the present invention is configured to affect the information displayed on the computer terminal via the input means. Examples for affecting the information are: to zoom in or out, to pivot the pane, to change between day mode and night mode, to show or hide certain subcharts and to change from normal view to full screen mode and vice versa.

In a further preferred embodiment, the configuration of the computer terminal to synchronize the selected information includes sending information relating to the selected information and, in a further preferred embodiment, information relating to the selected settings from the co-pilot computer terminal to the pilot computer terminal.

Therefore, the method and the computer terminal according to the present invention enable the first time to provide information to be displayed on the computer terminal of a pilot without the interaction of the pilot.

Further preferred embodiments are described in the dependent claims.

The invention is in the following described by means of the enclosed Figures, which show:
- Figure 1: A schematic diagram of a computer system comprising a pilot computer terminal and a co-pilot computer terminal.
- Figure 2: A flow chart illustrating the process of setup synchronization.
- Figure 3: A flow chart showing the process of synchronizing a specific chart.

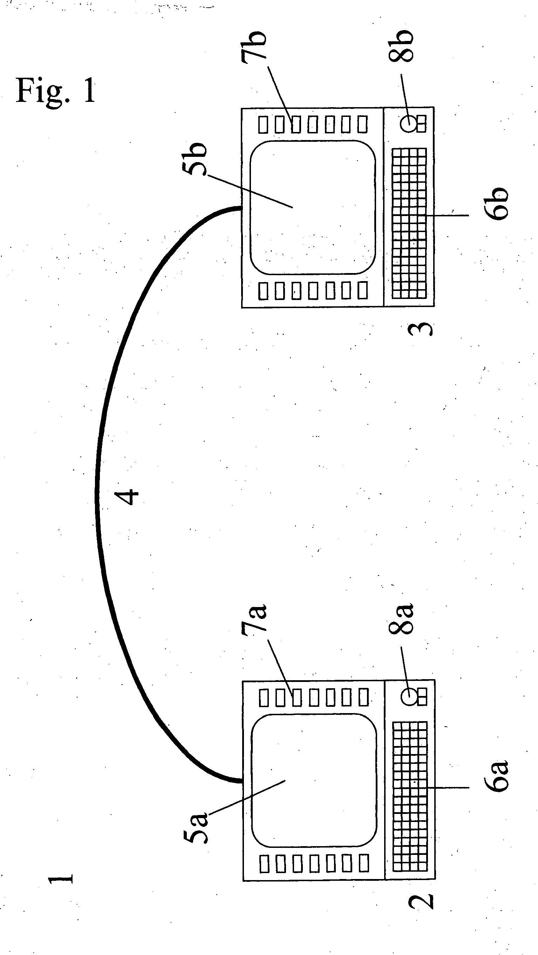

Figure 1 shows a computer system 1 which may be used in connection with the present invention. In the example shown in Figure 1, the computer system 1 comprises two computer terminals 2, 3, a co-pilot computer terminal 2 and a pilot computer terminal 3. The two computer terminals 2, 3 are connected, for example, via a network connection 4. In this network, the two computer terminals are identified by an individual IP number and/or an individual name and the communication between the computer terminals is preferably established using the TCP/IP protocol.

Both computer terminals 2, 3 comprise means for receiving information from the other computer terminal and for sending information to the other computer terminal, wherein the computer terminals are configured to select information, in particular flight charts and to synchronize the information with the other computer terminal via the network connection 4.

In order to carry out these tasks, each computer terminal 2, 3 comprises at least a processor, a memory, output means and input means. In the computer terminals 2, 3 shown in Figure 1, output means are realized by a screen 5 (also called display) and input means are realized by a keyboard 6, line select keys 7 and a track ball 8. Further, the computer terminals comprise a network connection 4 via which the computer terminals are connected with each other. The computer terminals may comprise also further connections, such as connections to other systems within the cockpit and to a database.

As a part of the preparation for the flight, the pilot/co-pilot sets up the computer terminal 2, 3, this means selects all charts which are relevant for the flight. These charts include, for example, charts about the departure airport and the arrival airport with a very detailed scale, charts about the surrounding areas of these airports with a less detailed scale and charts about the overflight areas with a relative large scale. The software in the computer terminals allows arranging the selected charts in different windows to form a so-called clipboard in order to enable the pilot to easily switch between these charts. Further, the pilot and/or the co-pilot may affect the charts by selecting certain settings individually for each of the charts which may be favorable for the planned flight.

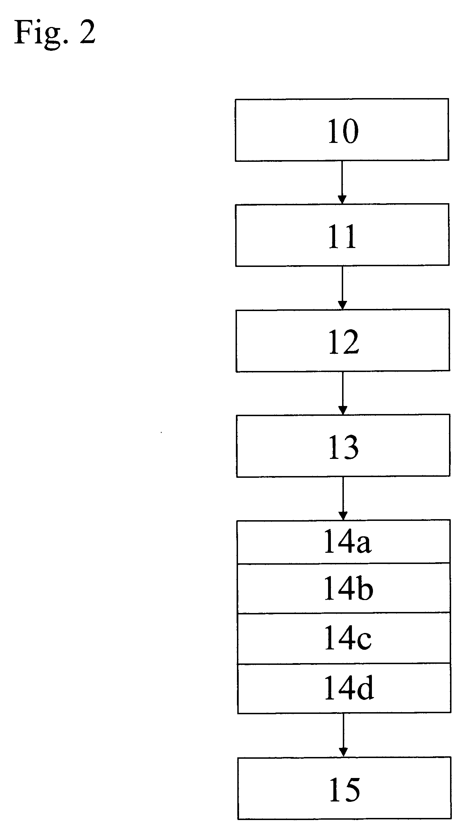

The method according to the present invention allows synchronizing the above described setup from one computer terminal to the other computer terminal. The process of synchronization of the result of the setup at one computer terminal according to the present invention is described with reference to the flow chart in Figure 2.

In a first step 10, the co-pilot selects the charts to be generated. The charts may be distinguished based on the covered area and based on level of information. For example, the pilot may select a different chart for an area surrounding an airport, depending on whether he wants to land on this airport or whether he wants to fly over this area. In a further step 11, the selected charts will be generated based on data stored in a database. All generated charts will be displayed on the screen (step 12) such that the pilot may easily choose the chart he wants to look at.

In step 13, the pilot has the possibility to choose individual settings for each of the charts and thereby affects the representation of the charts. Examples for settings are the zoom-level, center position, to change between day mode and night mode, to show or hide certain subcharts and to change from normal view to full screen mode and vice versa.

In order to enable the pilot to use the same charts as already selected by the co-pilot, in step 14 the co-pilot computer terminal and the pilot computer terminal are synchronized. This synchronization may comprise the following substeps: First 14a, information identifying the selected and generated charts is collected. Second 14b, information with respect to the selected settings for each chart is collected. Third 14c, the collected information is sent from the co-pilot computer terminal to the pilot computer terminal. Fourth 14d, in the pilot computer terminal the charts are generated based on the transmitted information.

In a further step 15, the charts with the selected settings are displayed at the pilot computer terminal.

Depending on the requests of the pilot and/or the co-pilot, information relating to all charts or only to certain charts is collected and transmitted. The pilot and/or the co-pilot may also select whether all settings or only certain settings are collected and transmitted. This may be realized by a function which asks the co-pilot which charts and which settings should be transmitted to the pilot computer terminal. Further, the pilot computer terminal may also ask the pilot which charts and which settings should be received from the co-pilot computer terminal. This functionality enables that only such information is exchanged between the two computer terminals which is helpful for the receiving computer terminal.

According to a preferred embodiment of the present invention, the method for synchronizing the setup information from one computer terminal to another includes a verifying step in which the pilot computer terminal, i.e. the receiving computer terminal verifies that he has access to the data relating to the version of the chart to be generated.

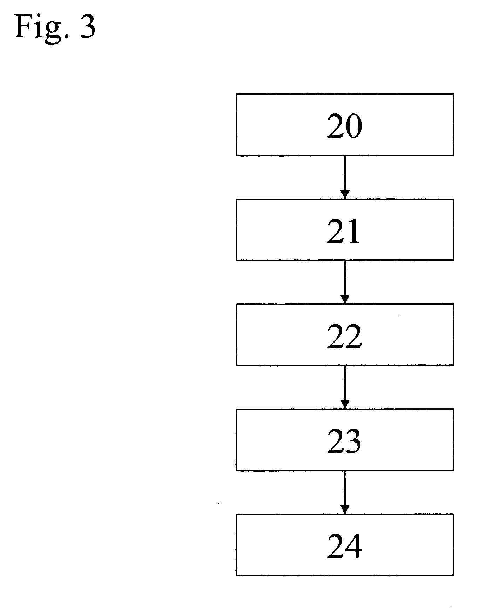

In an alternatively embodiment of the present invention, only one chart and its settings is synchronized between the co-pilot computer terminal and the pilot computer terminal. Figure 3 illustrates this embodiment of the present invention. This function may be used, if during the flight one chart becomes important which was not selected during the initial setup procedure or if the co-pilot wants to support the pilot by updating the settings of an already selected chart. This enables the pilot to further concentrate on the flight whereas the co-pilot selects and/or affects the chart on the co-pilot computer terminal.

In a first step 20, the co-pilot selects the information to be synchronized. This may be a chart which was already generated or a complete new chart. In the present example, the selected chart was not generated and therefore, in step 21, the chart is generated and displayed (step 22) on the co-pilot computer terminal. In a next step 23, the co-pilot specifies settings, such as the present position, a zoom setting and which details should be displayed on the chart. In response to input at the pilot computer terminal or at the co-pilot computer terminal, the chart and the corresponding settings are synchronized with to the pilot computer terminal (step 24). This synchronization includes sending information relating to the respective chart and the selected settings.

In another preferred embodiment of the invention, an ongoing synchronization between the pilot computer terminal and the co-pilot computer terminal may be established. Such an ongoing synchronization may be necessary, if the pilot concentrates on the flight whereas the co-pilot may support the pilot by selecting the necessary charts from the clipboard and changing the current settings according to the needs of the pilot. For example, the co-pilot may assist the pilot by changing the zoom-level. Further, the co-pilot may select for the pilot another chart from the clipboard. According to the present invention, these supporting actions of the co-pilot are enabled by the inventive synchronization function.

This embodiment may be realized by repeatedly carrying out the method described in connection with Figure 3, wherein the synchronization step may be initiated automatically or in response to input by the co-pilot.

## Claims

1. A method for providing information to a pilot computer terminal (3) in a cockpit of an aircraft, wherein the method comprises the following steps:
- selecting (10) information by using the input means (6a, 7a, 8a) of a co-pilot computer terminal (2), and
- synchronizing (14) the selected information to the pilot computer terminal (3).

2. Method according to claim 1, wherein the method further comprises the step of:
- generating (11) the selected information based on data stored on a database,
- displaying (12) the generated information on a display (5a) of the co-pilot computer terminal (2).

3. Method according to claim 2, wherein the method further comprises the step of:
- affecting (13) the information displayed on the co-pilot computer terminal (2) via the input means (6a, 7a, 8a) of the co-pilot computer terminal (2).

4. Method according to claim 3, wherein the step of affecting (13) the displayed information includes to zoom in or out, to pivot the pane, to change between day mode and night mode, to show or to hide certain subcharts and/or to change from normal view to full screen mode and vice versa.

5. Method according to any of claims 1 to 4, wherein the step of synchronizing (14) includes
- sending (14c) information relating to the selected charts from the co-pilot computer terminal (2) to the pilot computer terminal (3),
- generating (14d) the selected charts at the pilot computer terminal (3).

6. Method according to claim 5, wherein the method further comprises the step of:
- displaying (15) the generated charts on a display (5b) of the pilot computer terminal (3).

7. Method according to any of claims 1 to 4, wherein the step of synchronizing (14) also includes
- sending (14c) information relating to the selected charts together with the selected settings for each chart from the co-pilot computer terminal (2) to the pilot computer terminal (3),
- generating (14d) the selected charts with the selected settings at the pilot computer terminal (3).

8. Method according to claim 7, wherein the method further comprises the step of:
- displaying (15) the generated charts with the selected settings on a display (5b) of the pilot computer terminal (3).

9. Computer terminal (2) for a cockpit of an aircraft, wherein the computer terminal (2) is connected via a network connection (4) to at least one further computer terminal (3), wherein the computer terminal (2) comprises means for receiving information from the at least one further computer terminal (3) and for sending information to the at least one further computer terminal (3), and wherein the computer terminal (2) is configured to select information via the input means (6a, 7a, 8a) of the computer terminal (2) and to synchronize the selected information with the at least one further computer terminal (3) via the network connection (4).

10. Computer terminal (2) according to claim 9, wherein the computer terminal (2) comprises at least a processor, a memory, output means (5a) and input means (6a, 7a, 8a).

11. Computer terminal (2) according to claim 10, wherein the input means and output means are realized by a touch screen or by a screen with line select keys.

12. Computer terminal (2) according to any of claims 9 to 11, wherein the computer terminal (2) comprises also a connection to another system within the cockpit.

13. Computer terminal (2) according to any of claims 9 to 12, wherein the computer terminal (2) is connected to a database.

14. Computer terminal (2) according to any of claims 9 to 13, wherein the computer terminal (2) is configured to affect the information displayed on the computer terminal (2) via the input means (6a, 7a, 8a).

15. Computer terminal (2) according to any of claims 9 to 14, wherein the computer terminal (2) is configured to send information relating to the selected information and to selected settings to the at least on further computer terminal (3) via the network connection (4).

16. Computer system (1) comprising at least two computer terminals (2, 3) according to claims 9 to 15 connected via a network connection (4).
